# EUROPÄISCHE PATENTSCHRIFT

(11) **EP 1 762 450 B1**
(45) Veröffentlichungstag und Bekanntmachung des Hinweises auf die Patenterteilung: **12.11.2008**
(21) Anmeldenummer: 06016883.8
(22) Anmeldetag: 12.08.2006
(51) Int. Cl.: B60W 10/02, B60W 10/06, B60W 30/18, B60W 30/20

(54) **Verfahren und Vorrichtung zum Steuern des Betriebs einer Kupplung und eines Antriebsmotors im Antriebsstrang eines Fahrzeugs**
Method and device for controlling a clutch and an engine in a vehicle drivetrain
Procédé et dispositif pour contrôler un embrayage et un moteur dans une chaîne de transmission

(30) Priorität: 09.09.2005 DE 102005042975
(43) Veröffentlichungstag der Anmeldung: 14.03.2007
(73) Patentinhaber: LuK Lamellen und Kupplungsbau Beteiligungs KG, 77815 Bühl (DE)
(72) Erfinder: Stork, Holger, Dr., 77815 Bühl (DE); Werner, Olaf, Dr., 77815 Bühl (DE)

(56) Entgegenhaltungen:
- EP-A1- 0 631 897
- EP-A2- 0 901 932
- DE-A1- 10 230 612
- DE-A1- 10 250 729
- DE-A1- 19 926 324
- FR-A1- 2 572 032

## Beschreibung

Die Erfindung betrifft ein Verfahren und ein System zum Steuern des Betriebs einer Kupplung und eines Antriebsmotors im Antriebsstrang eines Fahrzeugs.

In jüngerer Zeit werden zunehmend so genannte "Drive-by-Wire" Systeme eingesetzt, bei denen zwischen einem manuell betätigten Betätigungsglied und einem Stellglied einer zu betätigenden Einheit keine direkte Verbindung besteht. Die manuell betätigte Stellung des Betätigungsgliedes wird von einem Sensor erfasst und zu einem Steuergerät übertragen, das normalerweise das Betätigungsglied entsprechend einer vorgegebenen Kurve in Abhängigkeit von der Stellung des Betätigungsgliedes betätigt. Dieser vom Betätigungsglied gesteuerten Steuerung des Stellgliedes kann eine elektronische Steuerung oder Regelung überlagert werden, mit der der Bedienungskomfort verbessert oder Problemsituationen vermieden werden können. Beispielsweise kann bei einer solchen Betätigung einer Kupplung ein Abwürgen des Motors beim Anfahren vermieden werden, indem die Kupplung erforderlichenfalls nicht so rasch geschlossen wird, wie durch das Kupplungspedal vorgegeben. In einer weiteren Anwendung ist bekannt, den Schlupf der Kupplung derart zu steuern, dass beim Anfahren oder anderen Betriebszuständen auftretende Triebsstrangschwingungen vermindert oder ganz unterdrückt werden.

Die EP 0 901 932 A2 offenbart ein Verfahren zum Steuern des Betriebs einer Kupplung und eines Antriebsmotors im Antriebsstrang eines Fahrzeugs und einer elektronischen Schlupfsteuerung, um Antriebsstrangsschwingungen zu unterdrücken.

Die FR 2 572 032 A1 offenbart ein Verfahren zum Steuern einer Kupplung im Antriebsstrang eines Fahrzeugs. Bei diesem Verfahren wird der Steuerung der Kupplung entsprechend der Betätigung eines Kupplungspedals eine elektronische Schlupfsteuerung überlagert. Die Steuerung des Schlupfes der Kupplung steuert die Unterdrückung von Antriebsstrangschwingungen. In der DE 102 30 612 A1 ist eine Verzögerung des Fahrerwunsches in Abhängigkeit der Betätigungsgeschwindigkeit des Gaspedals durch die Kupplungssteuerung offenbart. Dies stellt hinsichtlich des Anspruchs 1 den nächstliegenden Stand der Technik dar.

Bei konventionellen Handschaltfahrzeugen, bei denen die Kupplung rein mechanisch oder hydraulisch vom Kupplungspedal her betätigt wird, ist bekannt, die Steuerung des Antriebsmotors mit einer so genannten Ruckeldämpfung zu versehen, die bei schneller Gaspedalbetätigung den Aufbau des Motormoments verzögert, um beispielsweise beim Wechsel von Schub zu Zug einen Anlegeschlag im Getriebe zu vermeiden und um Anregungen von Antriebsstrangschwingungen zu verhindern. Eine Eigenart dieser Ruckeldämpfung liegt darin, dass das Ansprechverhalten des Motors träger wird und damit eine mögliche Dynamik bzw. Sportlichkeit des Motors nicht voll ausgenutzt wird. Mit Hilfe der oben genannten elektronischen Kupplungsbetätigung ist es möglich, durch Schlupfregelung Schwingungen des Antriebsstrangs in weiten Drehzahlbereich zu vermeiden, so dass das Ansprechverhalten des Motors bzw. dessen Dynamik besser ausgenutzt werden kann.

Bei elektronischer Kupplungsbetätigung muss wegen Ungenauigkeiten der als Eingangsgrößen für die Steuerung dienenden Motor- und Kupplungsmomente ein Kompromiss zwischen der sicheren Vermeidung von Antriebsstrangschwingungen und dem Ansprechverhalten des Motors gemacht werden. So kann es nötig sein, bei niedrigen Drehzahlen und Gasgeben Schwankungen der Drehzahl des Antriebsmotors zu akzeptieren, um die Kupplung sicher im Schlupfbetrieb zu halten. Weiter kann durch die Schlupfregelung der Kupplung ein Anlegeschlag im Getriebe oder Differential bei einem schnellen Schub-Zug-Wechsel häufig nicht verhindert werden.

Der Erfindung liegt die Aufgabe zugrunde, Möglichkeiten anzugeben, wie die vorgenannten Probleme vermieden werden können, ohne dass das Ansprechverhalten des Motors zu träge wird.

Eine Lösung dieser Aufgabe wird mit einem Verfahren zum Steuern des Betriebs einer Kupplung und eines Antriebsmotors im Antriebsstrang eines Fahrzeugs gelöst, bei welchem Verfahren der Steuerung der Kupplung entsprechend der Betätigung eines Kupplungspedals eine elektronische Schlupfsteuerung überlagert wird, die den Schlupf der Kupplung zur Unterdrückung von Antriebsstrangschwingungen steuert, und der Steuerung des Antriebsmotors entsprechend der Stellung eines Gaspedals eine von Betriebsparametern des Antriebsstrangs abhängige Motorsteuerung überlagert wird, wobei die elektronische Motorsteuerung zur Verzögerung der Reaktion des Motors auf Änderungen der Stellung des Gaspedals aktiviert wird, wenn die Stellung des Gaspedals sich zeitlich um mehr als einen vorbestimmten Schwellwert ändert. Sowohl der Schwellwert als auch das Ausmaß der Verzögerung der Motorreaktion können von weiteren Betriebsparametern, wie augenblickliche Motorlast, Drehzahl, Getriebeübersetzung usw. abhängen.

Erfindungsgemäß wird somit normalerweise lediglich mit "Clutch-by-Wire" gearbeitet, indem der Schlupf der Kupplung in an sich bekannter Weise zum Mindern von Triebsstrangschwingungen gesteuert bzw. geregelt wird, wobei das Ansprechverhalten des Motors auf Betätigungen des Gaspedals dynamisch bleibt, und nur in den vorgenannten Ausnahmefällen das Anspruchverhalten des Motors verzögert wird, um auch in Extremfällen Antriebsstrangschwingungen und Schläge im Antriebsstrang zu vermeiden.

Beispielsweise wird die elektronische Motorsteuerung aktiviert, wenn die Stellung des Gaspedals unterhalb einer vorbestimmten Motordrehzahl mit einer Geschwindigkeit größer als eine vorbestimmte Betätigungsgeschwindigkeit zunimmt oder wenn das Gaspedal mit einer Betätigungsgeschwindigkeit größer als eine vorbestimmte Betätigungsgeschwindigkeit in die Nullstellung oder aus der Nullstellung bewegt wird.

Mit Vorteil erfolgt die Verzögerung der Reaktion des Motors auf Änderungen der Stellung des Gaspedals abhängig von bei der Aktivierung der elektronischen Motorsteuerung vorhandenen Betriebsparametern.

Ein System zum Steuern des Betriebs einer Kupplung und eines Antriebsmotors im Antriebsstrang eines Fahrzeugs, mit dem die Erfindungsaufgabe gelöst wird, enthält einen Aktor zum Betätigen der Kupplung, ein Kupplungspedal, einen Sensor zum Erfassen der Stellung des Kupplungspedals, einen Aktor zum Betätigen eines Laststellgliedes des Antriebsmotors, ein Fahrpedal (Gaspedal), einen Sensor zum Erfassen der Stellung des Fahrpedals, Sensoren zum Erfassen von Betriebszuständen des Antriebsstrangs und eine elektronische Steuereinrichtung, deren Eingänge mit den Sensoren verbunden sind und deren Ausgänge mit den Aktoren verbunden sind, wobei die elektronische Steuereinrichtung die Aktoren entsprechend einem Verfahren nach einem der vorgenannten Ansprüche steuert.

Bei dem erfindungsgemäßen System kann die elektronische Steuereinrichtung ein Motorsteuergerät mit einer Verzögerungssteuerung zur Verzögerung der Reaktion des Motors auf Änderungen der Stellung des Gaspedals und ein Kupplungssteuergerät mit einer Schlupfsteuerung, die den Schlupf der Kupplung zur Unterdrückung von Antriebsstrangschwingungen steuert, enthalten, wobei ein Eingang des Motorsteuergerätes mit einem Ausgang des Kupplungssteuergerätes verbunden ist, so dass die Verzögerungssteuerung zumindest bei Aktivierung der Schlupfsteuerung und dann aktiviert wird, wenn die Stellung des Gaspedals unterhalb einer vorbestimmten Motordrehzahl mit einer Geschwindigkeit größer als eine vorbestimmte Betätigungsgeschwindigkeit zunimmt, oder wenn das Gaspedal mit einer Betätigungsgeschwindigkeit größer als eine vorbestimmte Betätigungsgeschwindigkeit zur Nullstellung hin oder von der Nullstellung weg bewegt wird.

In einer weiteren Ausführungsform des Systems kann die elektronische Steuereinrichtung ein Motorsteuergerät mit einer Verzögerungssteuerung zur Verzögerung der Reaktion des Motors auf Änderungen der Stellung des Gaspedals und ein Kupplungssteuergerät mit einer Schlupfsteuerung, die den Schlupf der Kupplung zur Unterdrückung von Antriebsstrangschwingungen steuert, enthalten, wobei das Motorsteuergerät und das Kupplungssteuergerät über einen Kommunikationsbus verbunden sind und die Verzögerungssteuerung zumindest bei Aktivierung der Schlupfsteuerung und dann aktiviert wird, wenn die Stellung des Gaspedals unterhalb einer vorbestimmten Motordrehzahl mit einer Geschwindigkeit größer als eine vorbestimmte Betätigungsgeschwindigkeit zunimmt, oder wenn das Gaspedal mit einer Betätigungsgeschwindigkeit größer als eine vorbestimmte Betätigungsgeschwindigkeit zur Nullstellung hin oder von der Nullstellung weg bewegt wird.

Auch ist es möglich, das erfindungsgemäße System derart auszubilden, dass die elektronische Steuereinrichtung ein Motorsteuergerät und ein mit dem Motorsteuergerät über einen Kommunikationsbus verbundenes Kupplungssteuergerät mit einer Schlupfsteuerung, die den Schlupf der Kupplung zur Unterdrückung von Antriebsstrangschwingungen steuert, und einer Verzögerungssteuerung zur Verzögerung der Reaktion des Motors auf Änderungen der Stellung des Gaspedals enthält, wobei das Kupplungssteuergerät die Verzögerungssteuerung zumindest bei Aktivierung der Schlupfsteuerung und dann aktiviert, wenn die Stellung des Gaspedals unterhalb einer vorbestimmten Motordrehzahl mit einer Geschwindigkeit größer als eine vorbestimmte Betätigungsgeschwindigkeit zunimmt, oder wenn das Gaspedal mit einer Betätigungsgeschwindigkeit größer als eine vorbestimmte Betätigungsgeschwindigkeit zur Nullstellung hin oder von der Nullstellung weg bewegt wird, indem die Verzögerungssteuerung Signale zur Steuerung der Motorlast an das Motorsteuergerät sendet.

Die Erfindung wird im Folgenden anhand schematischer Zeichnungen beispielsweise und mit weiteren Einzelheiten erläutert.

In den Figuren stellen dar:
Fig. 1 ein Schema eines Fahrzeugantriebsstrangs,
Fig. 2 ein Flussdiagramm zur Erläuterung eines erfindungsgemäßen Verfahrens, und
Fig. 3 Details eines Ausführungsbeispiels einer elektronischen Steuereinrichtung.

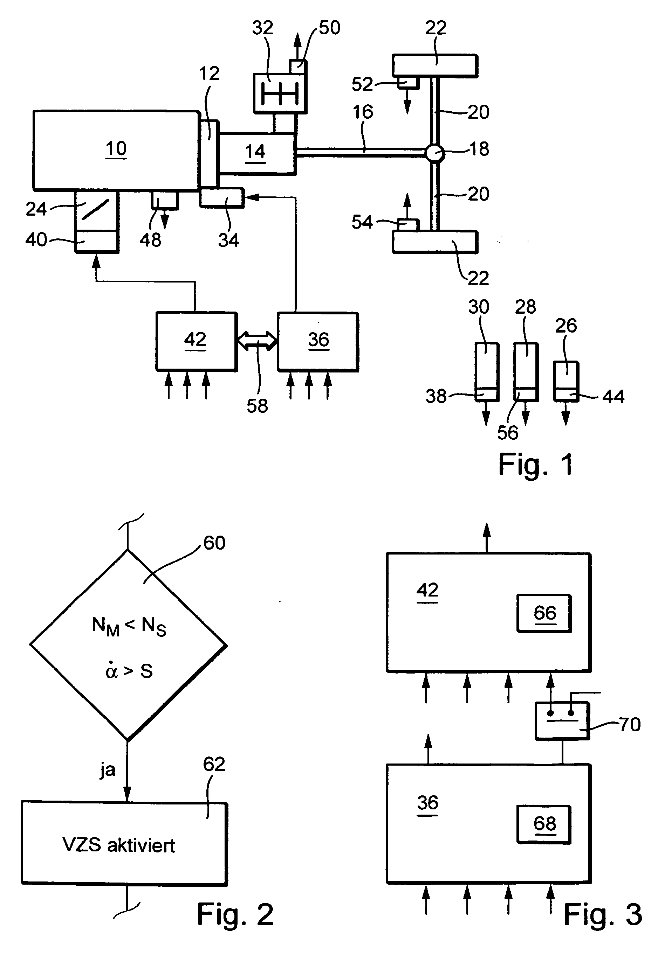

Gemäß Fig. 1 enthält ein Fahrzeugantriebstrang einen Antriebsmotor 10, der über eine Kupplung 12 mit einem Schaltgetriebe 14 verbunden ist, das über eine Kardanwelle 16, ein Differential 18 und Antriebswellen 20 mit angetriebenen Hinterrädern 22 eines Fahrzeugs verbunden ist. Es versteht sich, dass der Antriebsstrang auch als Vorderradantriebsstrang oder Allradantriebsstrang ausgebildet sein könnte.

Die Leistung des Motors 10 wird mittels eines Laststellgliedes 24, beispielsweise einer Drosselklappe, gesteuert.

Für seine Betätigung durch einen Fahrer oder eine Fahrerin weist das Fahrzeug in an sich bekannter Weise unter anderem ein Gaspedal 26, ein Kupplungspedal 28, ein Bremspedal 30 sowie eine Schalthebelbaugruppe 32 auf.

Für die Betätigung der Kupplung 12 ist ein Kupplungsaktor 34 vorgesehen, der von einem Kupplungssteuergerät 36 angesteuert wird, das mindestens einen mit einem Sensor 38 zur Erfassung der Stellung des Kupplungspedals 30 verbundenen Eingang aufweist. Die Kupplungsbetätigung ist somit, wie eingangs erläutert, als "Drive-by-Wire" bzw. "Clutch-by-Wire" System ausgebildet, wobei das Kupplungssteuergerät 36 den Kupplungsaktor 34 abhängig von der Stellung des Kupplungspedals 30 sowie weiteren Betriebsparametern steuert.

Auch die Betätigung des Laststellgliedes 24 erfolgt durch ein Drive-by-Wire System, indem ein Laststellgliedaktor 40 von einem Motorsteuergerät 42 angesteuert ist, das einen Eingang aufweist, der mit einem Sensor 44 zur Erfassung der Stellung des Gaspedals 26 verbunden ist.

Weiter kann ein nicht dargestelltes Steuergerät eines Fahrzeugstabilitätssteuersystems vorgesehen sein, das mit verschiedenen Sensoren zur Erfassung von Betriebsparametern des Fahrzeugs verbunden ist und beispielsweise Steuersignale zur Steuerung der nicht dargestellten Radbremsen des Fahrzeugs sowie gegebenenfalls zur Öffnung der Kupplung 12 und zur Veränderung des Laststellgliedes 24 erzeugt.

Sensoren zum Erfassen der Betriebsparameter sind beispielsweise ein Drehzahlsensor 48 zum Erfassen der Drehzahl des Antriebsmotors 10, ein Gangsensor 50 zur Erfassung der Stellung eines Schalthebels, Raddrehzahlsensoren 52, 54, ein Sensor 56 zur Erfassung der Betätigung des Bremspedals 28 sowie gegebenenfalls weitere Sensoren, wie ein Beschleunigungssensor, usw.

Die Steuergeräte 36, 42, 46, können getrennte Einheiten mit einem jeweiligen Prozessor und Speichereinrichtungen sein, die über ein BUS-System 58 kommunizieren. Die Steuergeräte können auch in unterschiedlicher Weise zusammengefasst sein oder durch ein einziges Steuergerät realisiert sein.

Aufbau und Grundfunktion des bisher beschriebenen Antriebsstrangs sind an sich bekannt und werden daher nicht im Einzelnen erläutert.

Das Kupplungssteuergerät 36 steuert den Aktor 34 normalerweise derart, dass das von der Kupplung 12 übertragbare Moment entsprechend einer vorgegebenen Kurve von der Stellung des Kupplungspedals 30 abhängt, die vom Sensor 38 zum Kupplungssteuergerät 36 übertragen wird. Auf diese Weise hat der Fahrer oder die Fahrerin des Fahrzeugs das Gefühl, die Kupplung unmittelbar zu betätigen. Bei Bedarf werden in dem Kupplungssteuergerät 36 abgelegte Programme aktiviert, die der Kupplungssteuerung durch das Kupplungspedal eine Steuerung oder Regelung überlagern, mit der kritische Zustände vermieden werden. Wenn beispielsweise das Kupplungspedal beim Anfahren zu rasch losgelassen wird und dadurch der Motor abgewürgt würde, kann die Kupplung verzögert derart geschlossen werden, dass die Motordrehzahl nicht unter eine kritische Drehzahl abfällt. Der Kupplungsschlupf, d.h. die Drehzahldifferenz zwischen Eingangsdrehzahl der Kupplung (Motordrehzahl) und Eingangsdrehzahl des Getriebes 14, die direkt oder über die Drehzahl der Ausgangswelle des Getriebes oder die Raddrehzahlen bei bekannter Übersetzung ermittelt werden kann, wird somit gesteuert bzw. geregelt. Diese Schlupfregelung kann auch zur Unterdrückung von Schwingungen im Antriebsstrang, die sich durch Schwingungen der Drehzahl der Kardanwelle 16 und vor allem durch Schwingungen der Drehzahl des Motors 10 bemerkbar machen, eingesetzt werden, indem beim Auftreten von Antriebsstrangschwingungen der Schlupf der Kupplung in an sich bekannter Weise derart gesteuert wird, dass die Schwingungen abnehmen.

In der Praxis hat sich gezeigt, dass allein durch die Schlupfsteuerung insbesondere bei plötzlichem Gasgeben aus niederen Drehzahlen heraus Drehzahlschwankungen des Motors in Folge von Triebstrangschwingungen oder bei einem raschen Wechseln zwischen Schub- und Zugbetrieb Schläge im Getriebe oder Differential nicht verhindert werden können.

Wenn wenigstens eine der vorgenannten Bedingungen vorliegt, d.h. Gasgeben bei niedrigen Drehzahlen oder rascher Lastwechsel, wird die Motorsteuerung dahingehend aktiviert, dass der Motor bzw. dessen Laststellglied der Veränderung der Stellung des Gaspedals nur verzögert folgt.

Anhand des Flussdiagramms der Fig. 2 wird dies beispielsweise erläutert:

Im Schritt 60 wird überprüft, ob die Motordrehzahl N_{M} kleiner ist als eine vorbestimmte Motordrehzahl Nₛ. Weiter wird überprüft, ob der Betätigungswinkel α des Gaspedals zeitlich um einen über einem Schwellwert S liegenden Wert zunimmt. Sind beide Bedingungen erfüllt, so wird entschieden, dass aus niedriger Drehzahl (Drehzahl kleiner N_{S}) heraus stark Gas gegeben wird, so dass es zweckmäßig ist, zusätzlich zu einer Kupplungsschlupfsteuerung eine Verzögerungssteuerung VZS im Schritt 62 zu aktivieren, die bewirkt, dass der Motor 10 auf Änderungen der Gaspedalstellung verzögert anspricht.

Der Schritt 60 kann beispielsweise nur erfolgen, wenn im Kupplungssteuergerät 36 bereits eine Schlupfsteuerung aktiviert ist. Er kann aber auch unmittelbar bei Vorliegen der genannten Bedingungen erfolgen, wobei eine zusätzliche Bedingung beispielsweise darin bestehen kann, dass die Ausgangsstellung des Gaspedals dessen nicht betätigte oder nur sehr schwach betätigte Stellung ist und diese Stellung länger als eine vorbestimmte Zeitdauer vorhanden war. Die Verzögerungssteuerung kann über eine vorbestimmte Zeitdauer aktiviert bleiben oder bei Vorliegen vorbestimmter Bedingungen, beispielsweise sehr geringer Triebstrangschwingungen, deaktiviert werden.

In ähnlicher Weise kann die Verzögerungssteuerung aktiviert werden, wenn ein rascher Schub-Zug-Wechsel erfolgt, d.h. das Gaspedal, nachdem es nicht betätigt war (wobei die Drehzahl des Motors gegebenenfalls zusätzlich erfasst werden kann) und plötzlich rasch betätigt wird oder umgekehrt das Gaspedal aus einer stark betätigten Stellung, in die es gegebenenfalls rasch bewegt wurde, plötzlich losgelassen wird, die Verzögerungssteuerung aktiviert werden, um Schläge im Antriebsstrang zu vermeiden.

Figur 3 zeigt ein Beispiel, wie ein Fahrzeug, das mit einer elektronischen Motorsteuerung (Motorsteuergerät 42) versehen ist, nachträglich mit einem elektronischen Kupplungssteuergerät 36 ausgerüstet wird, das den Betrieb des Motorsteuergeräts (42) beeinflusst. Im dargestellten Beispiel enthält das Motorsteuergerät 42 eine Verzögerungssteuerung 66 und enthält das Kupplungssteuergerät 36 eine Schlupfsteuerung 68. Die beiden Steuergeräte 36 und 42 kommunizieren über einen Ausgang des Kupplungssteuergerätes, der über ein Relais 70 mit einem Eingang des Motorsteuergerätes 42 verbunden wird, bei dessen Signalbeaufschlagung die Verzögerungssteuerung 66 aktiviert wird. Wenn das Kupplungssteuergerät 36 feststellt, dass die Bedingungen vorliegen, unter denen zusätzlich zur Schlupfsteuerung die im Motorsteuergerät enthaltene Verzögerungssteuerung aktiviert werden soll, steuert das Kupplungssteuergerät 36 das Relais 70 an, wodurch der entsprechende Eingang des Motorsteuergeräts auf eine Spannung gelegt wird, die zu einer Aktivierung der Verzögerungssteuerung führt. Bei der Ausführungsform gemäß Figur 3 sind die Eingänge des Motorsteuergeräts 42 und des Kupplungssteuergeräts 36 jeweils mit denjenigen Sensoren verbunden, deren Ausgangssignale zur Steuerung der entsprechenden Programme erforderlich sind.

Das Motorsteuergerät 42 kann in vereinfachter Ausführungsform auch lediglich darin bestehen, dass ein Dämpfungsglied zwischen dem Gaspedal 26 und dem Laststellglied 24 aktiviert wird, wenn die Verzögerungssteuerung aktiviert werden soll, ansonsten aber eine im Wesentlichen starre Verbindung zwischen dem Gaspedal und dem Laststellglied besteht.

In Weiterbildung der Anordnung der Figur 3 können beide Steuergeräte, wie in Figur 1 dargestellt, über einen Kommunikationsbus 58 verbunden sein, so dass mit Sensoren verbundene Eingänge nur einfach vorhanden sein müssen, da die Information zwischen den Steuergeräten ausgetauscht werden kann. Bei einem Informationsaustausch zwischen den beiden Steuergeräten kann eine Verzögerungssteuerung (Motor-Ruckeldämpfung) nicht nur "digital" ein- und ausgeschaltet werden, sondern die Funktion der Verzögerungsschaltung kann abhängig von Betriebsparametern verändert werden, beispielsweise kann bei besonders raschem Gasgeben aus sehr niedrigen Drehzahlen heraus gegebenenfalls zusätzlich abhängig vom jeweils eingelegten Gang das Ausmaß der Verzögerung stärker sein als bei plötzlichem Gasgeben bei höherer Drehzahl usw. Auch kann die Dauer, während der die Verzögerungsschaltung aktiviert ist, betriebsabhängig verändert werden.

Alternativ kann, wenn die beiden Steuergeräte 36 und 42 über ein Kommunikationssystem 58 verbunden sind oder zu einer einzigen Einheit zusammengefasst sind, die Funktionalität der Verzögerungssteuerung in das Kupplungssteuergerät 36 integriert werden, so dass das Kupplungssteuergerät das jeweils gewünschte Motormoment bzw. die Stellung des Laststellgliedes vorgibt, die dann vom Motorsteuergerät angesteuert wird. Auch auf diese Weise kann die Funktionalität der Verzögerungssteuerung an jeweilige Betriebsparameter angepasst werden.

### Bezugszeichenliste

- 10: Antriebsmotor
- 12: Kupplung
- 14: Schaltgetriebe
- 16: Kardanwelle
- 18: Differential
- 20: Antriebswelle
- 22: Hinterrad
- 24: Laststellglied
- 26: Gaspedal
- 28: Bremspedal
- 30: Kupplungspedal
- 32: Schalthebelbaugruppe
- 34: Kupplungsaktor
- 36: Kupplungssteuergerät
- 38: Sensor
- 40: Laststellgliedaktor
- 42: Motorsteuergerät
- 44: Sensor
- 48: Drehzahlsensor
- 50: Gangsensor
- 52: Raddrehzahlsensor
- 54: Raddrehzahlsensor
- 56: Sensor
- 58: BUS-System
- 66: Verzögerungssteuerung
- 68: Schlupfsteuerung
- 70: Relais

## Patentansprüche

1. Verfahren zum Steuern des Betriebs einer Kupplung (12) und eines Antriebsmotors (10) im Antriebsstrang eines Fahrzeugs, bei welchem Verfahren der Steuerung der Kupplung entsprechend der Betätigung eines Kupplungspedals (30) eine elektronische Schlupfsteuerung überlagert wird, die den Schlupf der Kupplung zur Unterdrückung von Antriebsstrangschwingungen steuert, und der Steuerung des Antriebsmotors entsprechend der Stellung eines Gaspedals (26) eine von Betriebsparametern des Antriebsstrangs abhängige Motorsteuerung überlagert wird, wobei die elektronische Motorsteuerung zur Verzögerung der Reaktion des Motors auf Änderungen der Stellung des Gaspedals aktiviert wird, wenn die Stellung des Gaspedals sich zeitlich um mehr als einen vorbestimmten Schwellwert ändert.

2. Verfahren nach Anspruch 1, wobei die elektronische Motorsteuerung aktiviert wird, wenn die Stellung des Gaspedals unterhalb einer vorbestimmten Motordrehzahl mit einer Geschwindigkeit größer als eine vorbestimmte Betätigungsgeschwindigkeit zunimmt oder wenn das Gaspedal mit einer Betätigungsgeschwindigkeit größer als eine vorbestimmte Betätigungsgeschwindigkeit in die Nullstellung oder aus der Nullstellung bewegt wird.

3. Verfahren nach Anspruch 1 oder 2, wobei die Verzögerung der Reaktion des Motors (10) auf Änderungen der Stellung des Gaspedals (26) abhängig von bei der Aktivierung der elektronischen Motorsteuerung vorhandenen Betriebsparametern erfolgt.

4. System zum Steuern des Betriebs einer Kupplung und eines Antriebsmotors im Antriebsstrang eines Fahrzeugs, welches System
einen Aktor (34) zum Betätigen der Kupplung (12),
ein Kupplungspedal (30),
einen Sensor (38) zum Erfassen der Stellung des Kupplungspedals,
einen Aktor (40) zum Betätigen eines Laststellgliedes des Antriebsmotors (10),
ein Fahrpedal (26),
einen Sensor (44) zum Erfassen der Stellung des Fahrpedals,
Sensoren (48, 50, 52, 54) zum Erfassen von Betriebszuständen des Antriebsstrangs, und
eine elektronische Steuereinrichtung (36, 42) enthält, deren Eingänge mit den Sensoren verbunden sind und deren Ausgänge mit den Aktoren verbunden sind, **dadurch gekennzeichnet, dass** die elektronische Steuereinrichtung die Aktoren entsprechend einem Verfahren nach einem der Ansprüche 1 bis 3 steuert.

5. System nach Anspruch 4, **dadurch gekennzeichnet, dass** die elektronische Steuereinrichtung (36, 42) ein Motorsteuergerät (42) mit einer Verzögerungssteuerung (66) zur Verzögerung der Reaktion des Motors (10) auf Änderungen der Stellung des Gaspedals (26) und ein Kupplungssteuergerät (36) mit einer Schlupfsteuerung, die den Schlupf der Kupplung zur Unterdrückung von Antriebsstrangschwingungen steuert, enthält, wobei ein Eingang des Motorsteuergerätes mit einem Ausgang des Kupplungssteuergerätes verbunden ist, so dass die Verzögerungssteuerung zumindest bei Aktivierung der Schlupfsteuerung und dann aktiviert wird, wenn die Stellung des Gaspedals (26) unterhalb einer vorbestimmten Motordrehzahl mit einer Geschwindigkeit größer als eine vorbestimmte Betätigungsgeschwindigkeit zunimmt, oder wenn das Gaspedal mit einer Betätigungsgeschwindigkeit größer als eine vorbestimmte Betätigungsgeschwindigkeit zur Nullstellung hin oder von der Nullstellung weg bewegt wird.

6. System nach Anspruch 4, **dadurch gekennzeichnet, dass** die elektronische Steuereinrichtung (36, 42) ein Motorsteuergerät (42) mit einer Verzögerungssteuerung (66) zur Verzögerung der Reaktion des Motors (10) auf Änderungen der Stellung des Gaspedals (26) und ein Kupplungssteuergerät (36) mit einer Schlupfsteuerung (68), die den Schlupf der Kupplung (12) zur Unterdrückung von Antriebsstrangschwingungen steuert, enthält, wobei das Motorsteuergerät und das Kupplungssteuergerät über einen Kommunikationsbus (58) verbunden sind und die Verzögerungssteuerung zumindest bei Aktivierung der Schlupfsteuerung und dann aktiviert wird, wenn die Stellung des Gaspedals (26) unterhalb einer vorbestimmten Motordrehzahl mit einer Geschwindigkeit größer als eine vorbestimmte Betätigungsgeschwindigkeit zunimmt, oder wenn das Gaspedal mit einer Betätigungsgeschwindigkeit größer als eine vorbestimmte Betätigungsgeschwindigkeit zur Nullstellung hin oder von der Nullstellung weg bewegt wird.

7. System nach Anspruch 4, **dadurch gekennzeichnet, dass** die elektronische Steuereinrichtung (36, 42) ein Motorsteuergerät (42) und ein mit dem Motorsteuergerät über einen Kommunikationsbus (58) verbundenes Kupplungssteuergerät (36) mit einer Schlupfsteuerung (68), die den Schlupf der Kupplung (12) zur Unterdrückung von Antriebsstrangschwingungen steuert, und einer Verzögerungssteuerung zur Verzögerung der Reaktion des Motors auf Änderungen der Stellung des Gaspedals enthält, wobei das Kupplungssteuergerät (36) die Verzögerungssteuerung zumindest bei Aktivierung der Schlupfsteuerung und dann aktiviert, wenn die Stellung des Gaspedals (26) unterhalb einer vorbestimmten Motordrehzahl mit einer Geschwindigkeit größer als eine vorbestimmte Betätigungsgeschwindigkeit zunimmt, oder wenn das Gaspedal mit einer Betätigungsgeschwindigkeit größer als eine vorbestimmte Betätigungsgeschwindigkeit zur Nullstellung hin oder von der Nullstellung weg bewegt wird aktiviert, so dass die Verzögerungssteuerung Signale zur Steuerung der Motorlast an das Motorsteuergerät sendet.

## Claims

1. Method for controlling the operation of a clutch (12) and of a drive engine (10) in the drivetrain of a vehicle, in which method the action of an electronic slip controller is superposed, corresponding to the actuation of a clutch pedal (30), on the control of the clutch, which slip controller controls the slip of the clutch to suppress drivetrain vibrations, and the action of an engine controller, which is dependent on operating parameters of the drivetrain, is superposed, corresponding to the position of a throttle pedal (26), on the control of the drive engine, with the electronic engine controller being activated to delay the reaction of the engine to changes in the position of the throttle pedal if the position of the throttle pedal changes over time by more than a predetermined threshold value.

2. Method according to Claim 1, with the electronic engine controller being activated if the position of the throttle pedal increases with a speed greater than a predetermined actuation speed when the engine speed is below a predetermined value, or if the throttle pedal is moved into the zero position or out of the zero position with an actuation speed greater than a predetermined actuation speed.

3. Method according to Claim 1 or 2, with the delay of the reaction of the engine (10) to changes in the position of the throttle pedal (26) taking place as a function of operating parameters present during the activation of the electronic engine controller.

4. System for controlling the operation of a clutch and of a drive engine in the drivetrain of a vehicle, which system comprises
an actuator (34) for actuating the clutch (12),
a clutch pedal (30),
a sensor (38) for detecting the position of the clutch pedal,
an actuator (40) for actuating a load control element of the drive engine (10),
a throttle pedal (26),
a sensor (44) for detecting the position of the throttle pedal,
sensors (48, 50, 52, 54) for detecting operating states of the drivetrain, and
an electronic control device (36, 42), whose inputs are connected to the sensors and whose outputs are connected to the actuators, **characterized in that** the electronic control device controls the actuators corresponding to a method according to one of Claims 1 to 3.

5. System according to Claim 4, **characterized in that** the electronic control device (36, 42) comprises an engine control unit (42) with a delay controller (66) for delaying the reaction of the engine (10) to changes in the position of the throttle pedal (26), and a clutch control unit (36) with a slip controller which controls the slip of the clutch to suppress drivetrain vibrations, with an input of the engine control unit being connected to an output of the clutch control unit, such that the delay controller is activated at least when the slip controller is activated and when the position of the throttle pedal (26) increases with a speed greater than a predetermined actuation speed when the engine speed is below a predetermined value, or when the throttle pedal is moved towards the zero position or away from the zero position with an actuation speed greater than a predetermined actuation speed.

6. System according to Claim 4, **characterized in that** the electronic control device (36, 42) comprises an engine control unit (42) with a delay controller (66) for delaying the reaction of the engine (10) to changes in the position of the throttle pedal (26), and a clutch control unit (36) with a slip controller (68) which controls the slip of the clutch (12) to suppress drivetrain vibrations, with the engine control unit and the clutch control unit being connected by means of a communication bus (58) and with the delay controller being activated at least when the slip controller is activated and when the position of the throttle pedal (26) increases with a speed greater than a predetermined actuation speed when the engine speed is below a predetermined value, or when the throttle pedal is moved towards the zero position or away from the zero position with an actuation speed greater than a predetermined actuation speed.

7. System according to Claim 4, **characterized in that** the electronic control device (36, 42) comprises an engine control unit (42) and a clutch control unit (36) which is connected to the engine control unit by means of a communication bus (58), which clutch control unit (36) has a slip controller (68), which controls the slip of the clutch (12) to suppress drivetrain vibrations, and a delay controller for delaying the reaction of the engine to changes in the position of the throttle pedal, with the clutch control unit (36) activating the delay controller at least when the slip controller is activated and when the position of the throttle pedal (26) increases with a speed greater than a predetermined actuation speed when the engine speed is below a predetermined value, or when the throttle pedal is moved towards the zero position or away from the zero position with an actuation speed greater than a predetermined actuation speed, such that the delay controller transmits signals for controlling the engine load to the engine control unit.

## Revendications

1. Procédé pour commander le fonctionnement d'un embrayage (12) et d'un moteur d'entraînement (10) dans une chaîne de transmission d'un véhicule, dans lequel procédé, on superpose à la commande de l'embrayage, en fonction de l'actionnement d'une pédale d'embrayage (30), une commande de glissement électronique, qui commande le glissement de l'embrayage pour supprimer les vibrations dans la chaîne de transmission, et on superpose une commande du moteur dépendant de paramètres de fonctionnement de la chaîne de transmission à la commande du moteur d'entraînement en fonction de la position d'une pédale d'accélérateur (26), la commande de moteur électronique étant activée pour retarder la réaction du moteur à des variations de la position de la pédale d'accélérateur, lorsque la position de la pédale d'accélérateur varie dans le temps de plus d'une valeur seuil prédéterminée.

2. Procédé selon la revendication 1, dans lequel la commande du moteur électronique est activée lorsque la position de la pédale d'accélérateur, en dessous d'un régime prédéterminé du moteur, augmente avec une vitesse supérieure à une vitesse d'actionnement prédéterminée ou quand la pédale d'accélérateur est déplacée avec une vitesse d'actionnement supérieure à une vitesse d'actionnement prédéterminée dans la position zéro ou depuis la position zéro.

3. Procédé selon la revendication 1 ou 2, dans lequel le retard de réaction du moteur (10) à des variations de la position de la pédale d'accélérateur (26) s'effectue en fonction de paramètres de fonctionnement existants lors de l'activation de la commande de moteur électronique.

4. Système pour commander le fonctionnement d'un embrayage et d'un moteur d'entraînement dans la chaîne de transmission d'un véhicule, lequel système contient :
- un actionneur (34) pour actionner l'embrayage (12),
- une pédale d'embrayage (30),
- un capteur (38) pour détecter la position de la pédale d'embrayage,
- un actionneur (40) pour actionner un organe de réglage de charge du moteur d'entraînement (10),
- une pédale d'accélérateur (26),
- un capteur (44) pour détecter la position de la pédale d'accélérateur,
- des capteurs (48, 50, 52, 54) pour détecter des états de fonctionnement de la chaîne de transmission, et
- un dispositif de commande électronique (36, 42), dont les entrées sont connectées aux capteurs et dont les sorties sont connectées aux actionneurs, **caractérisé en ce que** le dispositif de commande électronique commande les actionneurs en fonction d'un procédé selon l'une quelconque des revendications 1 à 3.

5. Système selon la revendication 4, **caractérisé en ce que** le dispositif de commande électronique (36, 42) contient un appareil de commande du moteur (42) avec une commande de retard (66) pour retarder la réaction du moteur (10) à des variations de la position de la pédale d'accélérateur (26) et un appareil de commande d'embrayage (36) avec une commande du glissement, qui commande le glissement de l'embrayage pour supprimer les vibrations dans la chaîne de transmission, une entrée de l'appareil de commande de moteur étant connectée à une sortie de l'appareil de commande d'embrayage de telle sorte que la commande de retard soit activée au moins à l'activation de la commande de glissement et lorsque la position de la pédale d'accélérateur (26), en dessous d'un régime prédéterminé du moteur, augmente avec une vitesse supérieure à une vitesse d'actionnement prédéterminée ou quand la pédale d'accélérateur est déplacée avec une vitesse d'actionnement supérieure à une vitesse d'actionnement prédéterminée dans la position zéro ou depuis la position zéro.

6. Système selon la revendication 4, **caractérisé en ce que** le dispositif de commande électronique (36, 42) contient un appareil de commande du moteur (42) avec une commande de retard (66) pour retarder la réaction du moteur (10) à des variations de la position de la pédale d'accélérateur (26) et un appareil de commande d'embrayage (36) avec une commande du glissement (68), qui commande le glissement de l'embrayage (12) pour supprimer les vibrations dans la chaîne de transmission, l'appareil de commande de moteur et l'appareil de commande d'embrayage étant connectés par le biais d'un bus de communication (58) et la commande de retard étant activée au moins à l'activation de la commande de glissement et lorsque la position de la pédale d'accélérateur (26), en dessous d'un régime prédéterminé du moteur, augmente avec une vitesse supérieure à une vitesse d'actionnement prédéterminée ou quand la pédale d'accélérateur est déplacée avec une vitesse d'actionnement supérieure à une vitesse d'actionnement prédéterminée dans la position zéro ou depuis la position zéro.

7. Système selon la revendication 4, **caractérisé en ce que** le dispositif de commande électronique (36, 42) contient un appareil de commande du moteur (42) et un appareil de commande d'embrayage (36) connecté à l'appareil de commande de moteur par le biais d'un bus de communication (58), avec une commande de glissement (68) qui commande le glissement de l'embrayage (12) pour supprimer les vibrations dans la chaîne de transmission, et une commande de retard pour retarder la réaction du moteur à des variations de la position de la pédale d'accélérateur, l'appareil de commande d'embrayage (36) activant la commande de retard au moins lors de l'activation de la commande de glissement et lorsque la position de la pédale d'accélérateur (26), en dessous d'un régime prédéterminé du moteur, augmente avec une vitesse supérieure à une vitesse d'actionnement prédéterminée ou quand la pédale d'accélérateur est déplacée avec une vitesse d'actionnement supérieure à une vitesse d'actionnement prédéterminée dans la position zéro ou depuis la position zéro, de sorte que la commande de retard envoie des signaux de commande de la charge du moteur à l'appareil de commande de moteur.
